(19) Europäisches Patentamt
European Patent Office
Office européen des brevets

(11) **EP 2 727 796 A2**

(12) **EUROPEAN PATENT APPLICATION**

(43) Date of publication:
**07.05.2014 Bulletin 2014/19**

(51) Int Cl.:
**B62D 5/04** *(2006.01)*

(21) Application number: **13189611.0**

(22) Date of filing: **22.10.2013**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **31.10.2012 JP 2012241131**

(71) Applicant: **JTEKT CORPORATION
Osaka-shi
Osaka 542-8502 (JP)**

(72) Inventors:
• **Sugiyama, Toyoki
Osaka-shi,,Osaka 542-8502 (JP)**
• **Higashi, Masayasu
Osaka-shi, Osaka 542-8502 (JP)**

(74) Representative: **Winter, Brandl, Fürniss, Hübner,
Röss, Kaiser, Polte - Partnerschaft
Patent- und Rechtsanwaltskanzlei
Bavariaring 10
80336 München (DE)**

(54) **Electric power steering system**

(57) An electric power steering system includes: an electric motor (21) that generates assist torque based on steering torque; an auxiliary power supply (40) connected in series with a main power supply (4) that supplies electric power to the electric motor (21), and capable of discharging electric power to the electric motor (21); and a control device (30) that controls a voltage to be applied to the electric motor (21). When the auxiliary power supply (40) starts discharging electric power to the electric motor (21), the control device (30) gradually increases a duty ratio of a switching element (44A), which is a command signal for commanding the auxiliary power supply (40) to discharge electric power.

F I G . 2

EP 2 727 796 A2

**Description**

BACKGROUND OF THE INVENTION

1. Field of the Invention

The invention relates to an electric power steering system including an auxiliary power supply.

2. Description of the Related Art

One of the conventional electric power steering systems includes an auxiliary power supply connected in series with a main power supply. The electric power steering system is configured such that, when a large assist force is required and therefore an electric motor that assists steering of a steering wheel consumes a large amount of electric power, for example, when a stationary steering (steering operation performed while a vehicle is not traveling) is performed while the vehicle is being placed in a garage or the vehicle is being parked, the electric motor is driven by electric power discharged from the auxiliary power supply in addition to electric power supplied from the main power supply. Thus, the amount of electric power that the main power supply needs to supply is restricted. The electric power steering system is configured such that, when a large assist force is not required and therefore the electric motor consumes only a small amount of electric power, for example, when the vehicle is traveling at a high speed, the electric motor is driven only by the electric power supplied from the main power supply. Japanese Patent Application Publication No. 2008-265381 (JP 2008-265381 A) describes an example of the configuration of such a conventional electric power steering system.

In the conventional electric power steering system, when the power supply mode is changed from a mode in which the electric motor is driven only by the electric power supplied from the main power supply to a mode in which the electric motor is driven by the electric power discharged from the auxiliary power supply in addition to the electric power supplied from the main power supply, the voltage from the auxiliary power supply in addition to the voltage from the main power supply is applied to the electric motor. Because the voltage that is applied to the electric motor rapidly increases, assist torque rapidly changes. This may give a driver uncomfortable steering feeling when the driver operates the steering wheel.

SUMMARY OF THE INVENTION

One object of the invention is to provide an electric power steering system configured such that a rapid change in assist torque is suppressed at the time when an auxiliary power supply starts discharging electric power to an electric motor.

An electric power steering system according to an aspect of the invention includes: an electric motor that generates assist torque based on steering torque; a main power supply that supplies electric power to the electric motor; an auxiliary power supply connected in series with the main power supply and capable of discharging electric power to the electric motor; and a control device that controls a voltage to be applied to the electric motor. When the auxiliary power supply starts discharging electric power to the electric motor, the control device introduces a delay into a command signal for commanding the auxiliary power supply to discharge electric power.

In the electric power steering system described above, the control device introduces a delay into the command signal for commanding the auxiliary power supply to discharge electric power. Accordingly, when the auxiliary power supply starts discharging electric power to the electric motor, an increase rate of the voltage to be applied to the electric motor is reduced. This accordingly suppresses a rapid increase in the power consumption of the electric motor, which is caused along with an increase in the voltage to be applied to the electric motor. As a result, a rapid change in the assist torque generated by the electric motor is suppressed.

The control device of the electric power steering system according to the above-described aspect may control the voltage to be applied to the electric motor in a variable manner based on a difference between power-supply electric power consumed by the electric power steering system due to assist control for assisting steering, and a charging and discharging threshold, which is a reference value for making a switchover between charging from the main power supply to the auxiliary power supply and discharging from the auxiliary power supply to the electric motor.

In the electric power steering system according to the above-described aspect, when the auxiliary power supply discharges electric power to the electric motor, the control device controls the voltage to be applied to the electric motor in a variable manner, thereby appropriately controlling an amount of electric power discharged from the auxiliary power supply to the electric motor. Therefore, as compared with a configuration in which the auxiliary power supply discharges the entirety of the electric power stored therein, it is possible to decrease the amount of electric power discharged from the auxiliary power supply to the electric motor when the difference between the power-supply electric power and the charging and discharging threshold is small. This accordingly suppress occurrence of a problem that the auxiliary power supply cannot appropriately discharge electric power to the electric motor due to capacity shortage of the auxiliary power supply.

The electric power steering system according to the above aspect may further include a switching element that periodically makes a switchover between an on-state in which the auxiliary power supply is able to discharge electric power to the electric motor and an off-state in which the auxiliary power supply is not able to discharge electric power to the electric motor. A duty ratio of the switching element may be set as a ratio of a duration in which the switching element is in the on-state, to one period of the switching element. The command signal may be the duty ratio of the switching element. The control device may gradually increase the duty ratio of the switching element as the delay introduced into the command signal.

With the electric power steering system, it is possible to suppress a rapid change in the assist torque when the auxiliary power supply starts discharging electric power to the electric motor.

BRIEF DESCRIPTION OF THE DRAWINGS

The foregoing and further features and advantages of the invention will become apparent from the following description of example embodiments with reference to the accompanying drawings, wherein like numerals are used to represent like elements and wherein:

FIG. 1 is a schematic diagram illustrating the configuration of an electric power steering system according to an embodiment of the invention;

FIG. 2 is a circuit diagram illustrating the circuit configuration of the electric power steering system according to the embodiment;

FIG. 3A and FIG. 3B are graphs illustrating transitions of the power-supply electric power and the amount of electric power stored in a capacitor in the electric power steering system according to the embodiment;

FIG. 4A to FIG. 4D are graphs illustrating transitions of duty ratios of respective switching elements in a charging and discharging circuit, a transition of a motor drive voltage, and a transition of assist torque, in the electric power steering system according to the embodiment;

FIG. 5 is a flowchart illustrating a procedure of a motor drive voltage variable control executed by a control device according to the embodiment; and

FIG. 6 is a flowchart illustrating a procedure of a charging-and-discharging-threshold change control executed by a control device according to another embodiment of the invention.

DETAILED DESCRIPTION OF EMBODIMENTS

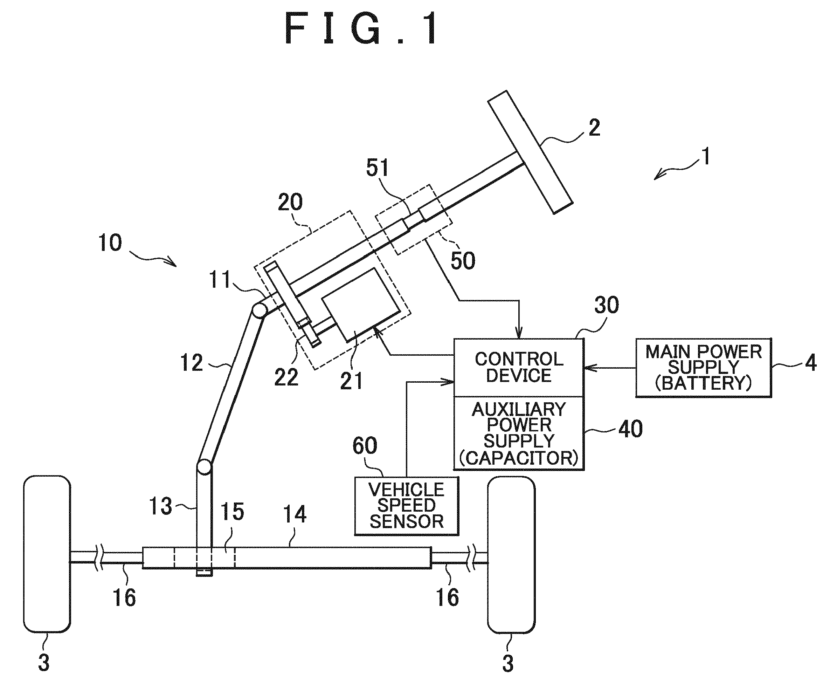

With reference to FIG. 1, the configuration of an electric power steering system 1 (hereinafter, referred to as "EPS 1") according to an embodiment of the invention will be described below. The EPS 1 includes an EPS main body 10, an assist device 20, a control device 30, an auxiliary power supply 40, a torque sensor 50, and a vehicle speed sensor 60. The EPS 1 is configured such that electric power is supplied to the assist device 20 from a battery serving as a main power supply 4 and the auxiliary power supply 40 via the control device 30. The EPS 1 assists an operation of a steering wheel 2 with the use of the assist device 20, based on the results of detection provided by the torque sensor 50 and the vehicle speed sensor 60.

The EPS main body 10 includes a column shaft 11, an intermediate shaft 12, a pinion shaft 13, a rack shaft 14, a rack-and-pinion mechanism 15, and two tie rods 16. The EPS main body 10 rotates the column shaft 11, the intermediate shaft 12, and the pinion shaft 13 together with each other in response to the rotation of the steering wheel 2. The EPS main body 10 changes the steered angle of wheels 3 by causing the rack shaft 14 to make a reciprocating motion with the rotation of the pinion shaft 13.

The rack-and-pinion mechanism 15 has a configuration in which a pinion gear (not shown) of the pinion shaft 13 and a rack gear (not shown) of the rack shaft 14 mesh with each other. The rack-and-pinion mechanism 15 converts the rotation of the pinion shaft 13 into a reciprocating motion of the rack shaft 14 due to the mesh between the pinion gear and the rack gear.

The assist device 20 includes an electric motor 21, which is a three-phase brushless motor, and a speed reduction mechanism 22. The assist device 20 applies, to the column shaft 11, a force (hereinafter referred to as "assist torque TA") for rotating the column shaft 11 by transmitting the rotation of the electric motor 21 to the column shaft 11 via the speed reduction mechanism 22. As described above, the EPS 1 according to the present embodiment has a column-assist type configuration.

The output level of a voltage signal output from the torque sensor 50 changes on the basis of the torsion of a torsion bar 51 connected to an intermediate portion of the column shaft 11, that is, the magnitude of a steering torque $\tau$ applied to the column shaft 11 in response to the operation of the steering wheel 2. The torque sensor 50 outputs the voltage signal to the control device 30.

The output level of a voltage signal output from the vehicle speed sensor 60 changes on the basis of the rotational speed of a drive shaft (not shown) of a vehicle, that is, a vehicle traveling speed (hereinafter referred to as "vehicle speed V"). The vehicle speed sensor 60 outputs the voltage signal to the control device 30.

The control device 30 calculates the magnitude of the steering torque $\tau$ and the direction thereof based on the voltage signal from the torque sensor 50. The control device 30 calculates the vehicle speed V based on the voltage signal from the vehicle speed sensor 60. The control device 30 executes assist control for assisting steering. More specifically, the control device 30 calculates a target assist torque based on the steering torque $\tau$ and the vehicle speed V. Then, the control device 30 controls the operation of the electric motor 21 by supplying the electric motor 21 with electric power corresponding to the target assist torque.

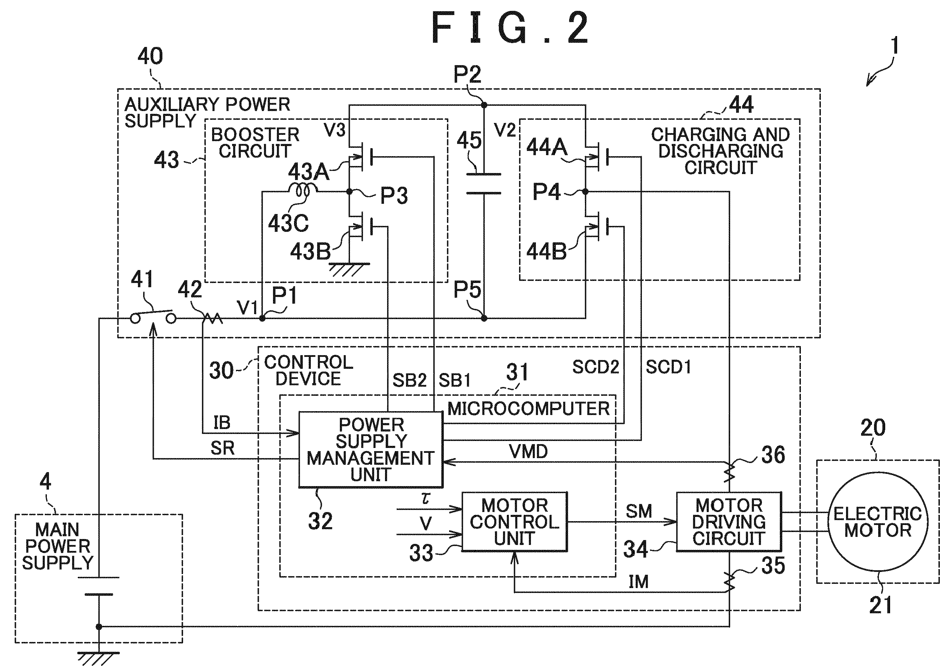

With reference to FIG. 2, the configurations of the control device 30 and the auxiliary power supply 40 will be described below. The control device 30 includes a microcomputer 31, a motor driving circuit 34, a current sensor 35, and a voltage sensor 36. The control device 30 controls the voltage to be applied to the motor driving circuit 34 (hereinafter referred to as "motor drive voltage VMD").

The output level of a voltage signal output from the current sensor 35 changes on the basis of the magnitude of actual current (hereinafter referred to as "motor current IM") supplied to the electric motor 21. The current sensor 35 outputs the voltage signal to a motor control unit 33.

The output level of a voltage signal output from the voltage sensor 36 changes on the basis of the magnitude of the voltage between the auxiliary power supply 40 and the motor driving circuit 34, that is, the motor drive voltage VMD. The voltage sensor 36 outputs the voltage signal to a power supply management unit 32 of the microcomputer 31.

The microcomputer 31 includes the power supply management unit 32 and the motor control unit 33. The microcomputer 31 controls the charging and discharging operation of the auxiliary power supply 40 with the use of the power supply management unit 32. The microcomputer 31 controls the operation of the motor driving circuit 34 with the use of the motor control unit 33.

The power supply management unit 32 controls the operations of a relay 41, a booster circuit 43, and a charging and discharging circuit 44 of the auxiliary power supply 40. The power supply management unit 32 outputs, to the relay 41, a relay signal SR for controlling the operation of the relay 41. The power supply management unit 32 outputs, to the booster circuit 43, booster signals SB1, SB2 for controlling the operation of the booster circuit 43. The power supply management unit 32 outputs, to the charging and discharging circuit 44, charging and discharging signals SCD1, SCD2 for controlling the operation of the charging and discharging circuit 44.

The motor control unit 33 calculates the target assist torque based on the steering torque $\tau$ and the vehicle speed V. The motor control unit 33 executes current feedback control such that the motor current IM coincides with a current command value IMS corresponding to the target assist torque. The motor control unit 33 outputs, to the motor driving circuit 34, a motor control signal SM generated through execution of the current feedback control. Note that the motor control signal SM functions also as a signal for executing P WM control on the motor driving circuit 34. Further, the target assist torque increases as the absolute value of the steering torque $\tau$ increases or as the absolute value of the vehicle speed V decreases.

The motor driving circuit 34 has a known configuration in which two switching elements (MOSFETs) are connected in series with each of the phases of the electric motor 21. In the motor driving circuit 34, the two switching elements of each of the phases of the motor driving circuit 34 are alternately switched between the on-state and the off-state based on the motor control signal SM from the motor control unit 33. The motor driving circuit 34 applies the motor drive voltage VMD to the electric motor 21, through PWM driving, on the basis of the switching of each of the switching elements between the on-state and the off-state.

The auxiliary power supply 40 is formed separately from the main power supply 4. The auxiliary power supply 40 is connected in series with the main power supply 4. The auxiliary power supply 40 includes the relay 41, a current sensor 42, the booster circuit 43, the charging and discharging circuit 44, and a capacitor 45. The capacitor 45 of the auxiliary power supply 40 is capable of discharging electric power to the electric motor 21.

The relay 41 is arranged between the main power supply 4 and the booster circuit 43. The relay 41 switches the power supply state between the on-state in which the main power supply 4 supplies electric power to the motor driving circuit 34 and the off-state in which the main power supply 4 does not supply electric power to the motor driving circuit 34.

The current sensor 42 is arranged between the relay 41 and the booster circuit 43. The output level of a voltage signal output from the current sensor 42 changes on the basis of the magnitude of a current (hereinafter referred to as "battery current IB") output from the main power supply 4. The current sensor 42 outputs the voltage signal to the power supply management unit 32.

The booster circuit 43 boosts the output voltage based on the voltage (battery voltage) of the main power supply 4, that is, the output voltage at a connecting point P1 between the main power supply 4 and the booster circuit 43 (hereinafter referred to as "output voltage V1"), and applies the boosted output voltage to a connecting point P2, which is an positive terminal of the capacitor 45, thereby charging the capacitor 45.

The booster circuit 43 includes a pair of switching elements 43A, 43B, and a boosting coil 43C. The booster circuit 43 has a configuration in which one end of the boosting coil 43C is connected to a connecting point P3 between the switching elements 43A, 43B, which are connected in series with each other. The booster circuit 43 has a configuration in which the output voltage V1 is applied to the other end of the boosting coil 43C.

As the switching elements 43A, 43B, MOSFETs are used. One end of the switching element 43A on the upper side is connected to the positive terminal (the connecting point P2) of the capacitor 45. One end of the switching element 43B on the lower side is grounded. The switching elements 43A, 43B are switched between the on-state and the off-state based on the booster signals SB1, SB2 from the power supply management unit 32, respectively.

The charging and discharging circuit 44 is connected in parallel with the booster circuit 43. The charging and discharging circuit 44 includes a pair of switching elements 44A, 44B. The charging and discharging circuit 44 has a configuration in which the switching elements 44A, 44B are connected in series with each other. The charging and discharging circuit 44 is connected to the motor driving circuit 34 at a connecting point P4 between the switching elements 44A, 44B.

As the switching elements 44A, 44B, MOSFETs are used. One end of the switching element 44A on the upper side is connected to the positive terminal (the connecting point P2) of the capacitor 45. One end of the switching element 44B on the lower side is connected to the main power supply 4 via the relay 41 and the current sensor 42. The switching elements 44A, 44B are periodically switched between the on-state, which is a conductive state, and the off-state, which is a nonconductive state, based on the charging and discharging signals SCD1, SCD2 from the power supply management unit 32, respectively. In the on-state, the switching element 44A is in a state where electric power can be discharged from the capacitor 45 (the auxiliary power supply 40) to the motor driving circuit 34 (the electric motor 21). In the off-state, the switching element 44A is in a state where electric power cannot be discharged from the capacitor 45 (the auxiliary power supply 40) to the motor driving circuit 34 (the electric motor 21). In the on-state, the switching element 44B is in a state where electric power can be supplied from the main power supply 4 to the motor driving circuit 34 via the switching element 44B. In the off-state, the switching element 44B is in a state where electric power cannot be supplied from the main power supply 4 to the motor driving circuit 34 via the switching element 44B.

Between the booster circuit 43 and the charging and discharging circuit 44, the capacitor 45 is connected in parallel with the booster circuit 43 and the charging and discharging circuit 44. One end of the capacitor 45 is connected to the connecting point P2, and the other end of the capacitor 45 is connected to a connecting point P5 between the current sensor 42 and the switching element 44B. As the capacitor 45, an electric double-layer capacitor is used.

The operation of the relay 41 will be described below. The relay 41 is switched between the on-state and the off-state based on the relay signal SR from the power supply management unit 32. When an ignition switch (not shown) of the vehicle is turned on, the relay 41 is switched from the off-state to the on-state. When the ignition switch is turned off, the relay 41 is switched from the on-state to the off-state.

The operation of the booster circuit 43 will be described below. The booster circuit 43 applies, to the positive terminal (the connecting point P2) of the capacitor 45, a boosted voltage V3 generated when the switching element 43B on the lower side is switched from the on-state to the off-state. More specifically, in the booster circuit 43, the switching element 43B on the lower side becomes conductive in the on-state, so that one end of the boosting coil 43C is grounded. Then, the booster circuit 43 superimposes, on the output voltage V1, an induced voltage generated in the boosting coil 43C when the switching element 43B is switched from the off-state to the on-state, and outputs the thus obtained voltage. Note that the switching element 43A on the upper side has a function of preventing a current from flowing from the capacitor-45 side to the booster-circuit-43 side (back-flow).

The operation of the charging and discharging circuit 44 will be described below. The charging and discharging circuit 44 switches the power supply mode between a first power supply mode in which the capacitor 45 can be charged with electric power from the main power supply 4 and a second power supply mode in which the capacitor 45 can discharge electric power to the motor driving circuit 34, based on a combination of the on-state and the off-state of the switching elements 44A, 44B. Note that the switching elements 44A, 44B are controlled by the power supply management unit 32 so as not to be in the on-state at the same time.

In the first power supply mode, the switching element 44A on the upper side is in the off-state and the switching element 44B on the lower side is in the on-state. In the first power supply mode, the battery current IB from the main power supply 4 is supplied to the capacitor 45, and is supplied to the motor driving circuit 34 via the switching element 44B on the lower side. In the first power supply mode, the switching element 44A on the upper side is in the off-state, so that the capacitor 45 does not discharge electric power to the motor driving circuit 34. In the first power supply mode, the motor drive voltage VMD is the output voltage V1.

In the second power supply mode, the switching element 44A on the upper side is in the on-state and the switching element 44B on the lower side is in the off-state. In the second power supply mode, the main power supply 4 and the auxiliary power supply 40 (the capacitor 45) are connected in series with each other. In the second power supply mode, the motor driving circuit 34 is supplied with current discharged from the capacitor 45 in addition to the electric power from the main power supply 4. In the second power supply mode, the motor drive voltage VMD is the sum of the output voltage V1 and an output voltage V2 from the capacitor 45.

In the second power supply mode, values other than 100% may be used as a duty ratio, which is a ratio of the duration in which the switching element 44A is in the on-state with respect to one period of the switching element 44A, and a duty ratio, which is a ratio of the duration in which the switching element 44B is in the on-state with respect to one period of the switching element 44B. Thus, the motor drive voltage VMD varies. That is, the motor drive voltage VMD is changed depending on the duty ratios of the switching elements 44A, 44B. More specifically, as the duty ratio of the switching element 44A increases so that a greater amount of electric power is supplied to the motor driving circuit 34, the motor drive voltage VMD increases. When the duty ratio of the switching element 44A is 100%, the motor drive voltage VMD reaches its maximum value. When the duty ratio of the switching element 44A is 50%, the motor drive voltage VMD is half the maximum value.

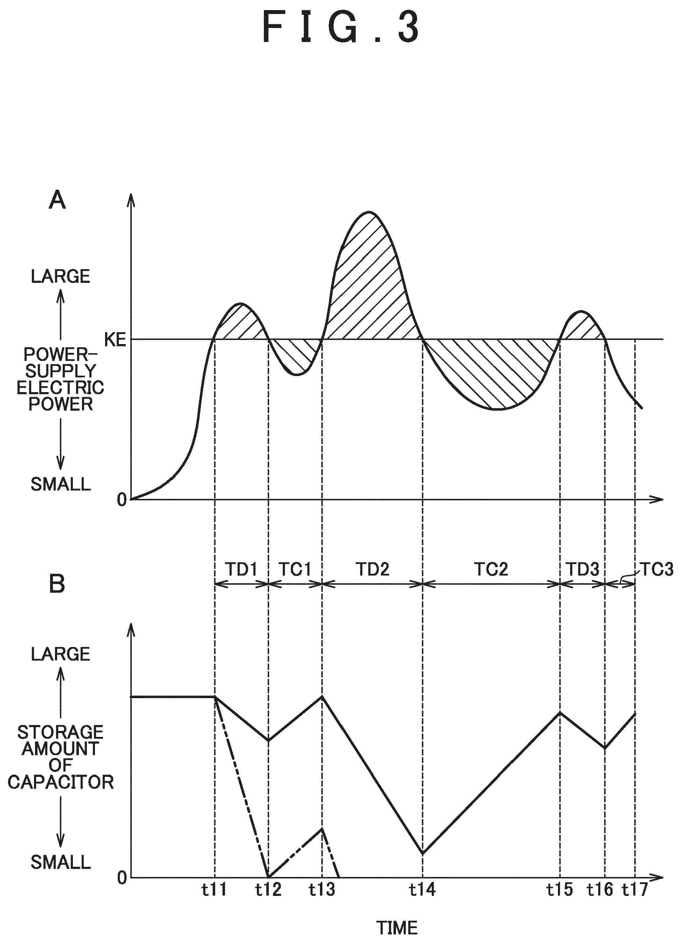

With reference to FIG. 3, control of the operation for supplying electric power to the motor driving circuit 34, which is executed by the control device 30, will be described. Note that in the following description with reference to FIG. 3, components related to the EPS 1, to which reference symbols are assigned, indicate the components illustrated in FIG. 1 or FIG. 2.

FIG. 3 illustrates a transition of power-supply electric power that the EPS 1 requires the main power supply 4 to supply electric power in order to execute assist control. In FIG. 3, a first discharging period TD1 indicates a period from time t11 to time t12. A first charging period TC1 indicates a period from time t12 to time t13. A second discharging period TD2 indicates a period from time t13 to time t14. A second charging period TC2 indicates a period from time t14 to time t15. A third discharging period TD3 indicates a period from time t15 to time t16. A third charging period TC3 indicates a period from time t16 to time t17.

Hereinafter, actual power-supply electric power supplied from the main power supply 4 to the EPS 1 is referred to as power-supply electric power PS. The power-supply electric power PS is calculated by the power supply management unit 32 (see FIG. 2) based on the battery current IB detected by the current sensor 42.

The control device 30 controls switching of the charging and discharging circuit 44 between the first power supply mode and the second power supply mode. More specifically, as illustrated in FIG. 3A, when the power-supply electric power PS is less than a charging and discharging threshold KE, that is, in the first charging period TC1, the second charging period TC2, and the third charging period TC3, the control device 30 places the charging and discharging circuit 44 in the first power supply mode. On the other hand, when the power-supply electric power PS is equal to or greater than the charging and discharging threshold KE, that is, in the first discharging period TD1, the second discharging period TD2, and the third discharging period TD3, the control device 30 places the charging and discharging circuit 44 in the second power supply mode. Note that examples of a case where the power-supply electric power PS is equal to or greater than the charging and discharging threshold KE include a case where a driver performs stationary steering of the steering wheel 2 while the vehicle is being placed in a garage or the vehicle is being parked. Further, the power-supply electric power PS is equal to or greater than the charging and discharging threshold KE, for example, in a period from time t11, t13, or t15 in which the charging and discharging circuit 44 is switched from the first power supply mode to the second power supply mode.

When the control device 30 controls the switching of the charging and discharging circuit 44 between the first power supply mode and the second power supply mode, the peak of the power-supply electric power PS (the battery current IB) is restricted at the charging and discharging threshold KE (peak-cut). Consequently, a load on the main power supply 4 is reduced.

If electric power accumulated in the capacitor 45 of the auxiliary power supply 40 is entirely supplied to the motor driving circuit 34 when the charging and discharging circuit 44 is switched from the first power supply mode to the second power supply mode, the following problem occurs. As illustrated by an alternate long and two short dashes line in FIG. 3B, if the electric power in the capacitor 45 is entirely supplied to the motor driving circuit 34 in the first discharging period TD 1, in which the required power-supply electric power PS is less than that in the second discharging period TD2, the electric power accumulated in the capacitor 45 becomes zero at time t12. Because the amount of electric power with which the capacitor 45 is charged in the first charging period TC1 is less than the amount of electric power with which the capacitor 45 is charged in the first discharging period TD1, the capacitor 45 is not able to supply, to the motor driving circuit 34, the electric power required in the second discharging period TD2. That is, capacity shortage of the capacitor 45 occurs in the second discharging period TD2.

In order to avoid such capacity shortage, in each of the discharging periods TD1 to TD3, it is preferable to adjust the amount of electric power discharged from the capacitor 45 based on the magnitude of the power-supply electric power PS, instead of supplying the entirety of the electric power in the capacitor 45 to the motor driving circuit 34.

The control device 30 in the present embodiment executes motor drive voltage variable control for controlling the motor drive voltage VMD in a variable manner based on the difference between the power-supply electric power PS and the charging and discharging threshold KE. As the difference between the power-supply electric power PS and the charging and discharging threshold KE increases, the motor drive voltage VMD increases.

The control device 30 calculates duty ratios of the switching elements 44A, 44B on the basis of the difference between the power-supply electric power PS and the charging and discharging threshold KE in the motor drive voltage variable control.

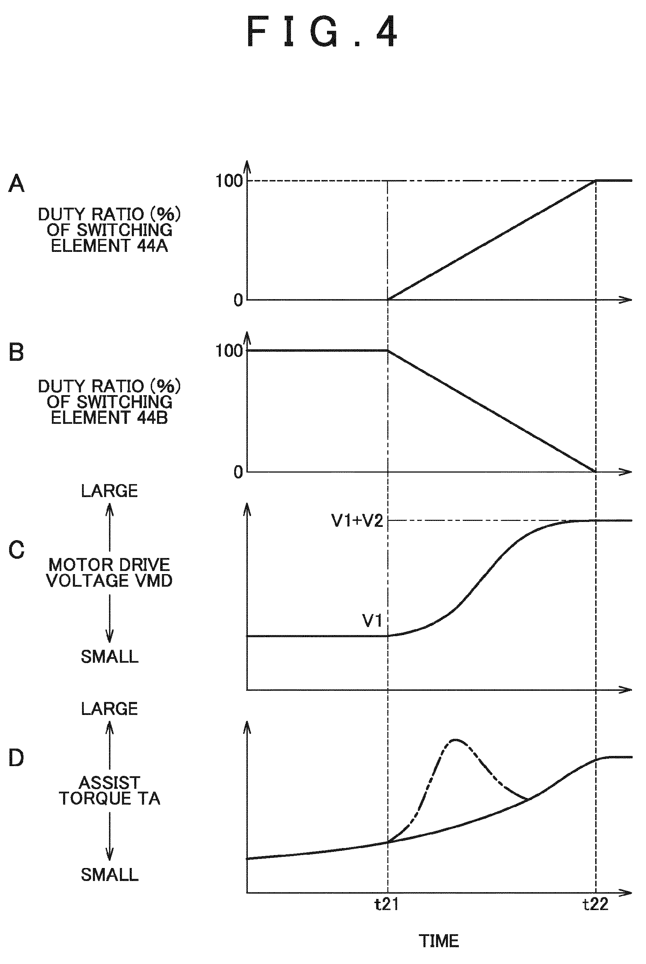

With reference to FIG. 4, description will be provided on the control on a change in the motor drive voltage VMD when the charging and discharging circuit 44 is switched from the first power supply mode to the second power supply mode, in addition to the effect thereof. Note that in the following description with reference to FIG. 4, components related to the EPS 1, to which reference symbols are assigned, indicate the components illustrated in FIG. 1 or FIG. 2.

FIG. 4 illustrates respective operations of the switching elements 44A, 44B at time t21, a transition of the motor drive voltage VMD, and a transition of the assist torque TA. An alternate long and two short dashes line in FIG. 4A illustrates a mode in which the switching element 44A is switched from the off-state, i.e., the duty ratio of 0%, to the on-state, i.e., the duty ratio of 100%, and an alternate long and two short dashes line in FIG. 4B illustrates a mode in which the switching element 44B is switched from the on-state, i.e., the duty ratio of 100%, to the off-state, i.e., the duty ratio of 0%.

As illustrated by an alternate long and two short dashes line in FIG. 4A, if the switching element 44A of the charging and discharging circuit 44 is switched directly from the duty ratio of 0% to the duty ratio of 100% at time t21, the following problem occurs.

As illustrated by an alternate long and two short dashes line in FIG. 4B, the switching element 44B of the charging and discharging circuit 44 is switched from the duty ratio of 100% to the duty ratio of 0% at time t21. Thus, discharge to the motor driving circuit 34 is performed at the maximum voltage of the capacitor 45 in addition to electric power supply from the main power supply 4 to the motor driving circuit 34. Accordingly, as illustrated by an alternate long and two short dashes line in FIG. 4C, the output voltage V2 is superposed on the output voltage V1 at time t21, so that the motor drive voltage VMD rapidly increases. As a result, as illustrated by an alternate long and two short dashes line in FIG. 4D, the assist torque TA rapidly changes. Therefore, uncomfortable steering feeling may be given to the driver when the driver operates the steering wheel 2.

As illustrated by a continuous line in FIG. 4A, the control device 30 in the present embodiment gradually increases the duty ratio of the switching element 44A from a state (the off-state) in which the duty ratio of the switching element 44A is 0%. Then, the control device 30 places the switching element 44A in a state (the on-state) in which the duty ratio is 100 %, at time t22. That is, the control device 30 introduces a delay into the duty ratio of the switching element 44A, which is a command signal for commanding the capacitor 45 to discharge electric power. Thus, as illustrated by a continuous line in FIG. 4B, the control device 30 gradually decreases the duty ratio of the switching element 44B from a state (the on-state) in which the duty ratio of the switching element 44B is 100%. Then, the control device 30 places the switching element 44B in a state (the off-state) in which the duty ratio is 0%, at time t22. Note that the absolute value of the increase of the duty ratio of the switching element 44A is equal to the absolute value of the decrease of the duty ratio of the switching element 44B.

As illustrated by a continuous line in FIG. 4C, such operations of the switching elements 44A, 44B gradually increase the motor drive voltage VMD. As a result, as illustrated by a continuous line in FIG. 4D, a rapid change in the assist torque TA is suppressed. This suppresses the possibility that uncomfortable steering feeling will be given to the driver when the driver operates the steering wheel 2.

Next, calculation of the increase of the duty ratio of the switching element 44A will be described. The increase of the duty ratio of the switching element 44A is determined based on electric power feedback control, which is PID control. More specifically, the increase of the duty ratio of the switching element 44A is determined based on a time constant of a transfer function G(s) between a deviation e(t) between the power-supply electric power PS and the charging and discharging threshold KE, and a control amount c(t), which is a change amount of the motor drive voltage VMD. The relationship between the deviation e(t) and the control amount c(t) is represented by Equation (1) indicated below.

$$c(t) = kp(e(t) + \frac{1}{\tau i} \int e(t)dt + \tau d \frac{de(t)}{dt}) \qquad \text{Equation (1)}$$

Here, kp indicates a proportional gain, kp / τi indicates an integral gain, and kp • τd indicates a derivative gain.

Laplace transform is executed on Equation (1) so as to obtain Equation (2) indicated below.

$$c(s) = kp(1 + \frac{1}{\tau i s} + \tau d s)E(s) \qquad \text{Equation (2)}$$

Here, c(s) indicates a control amount, E(s) indicates a deviation, kp / τis indicates an integral gain, and kp • τds indicates a derivative gain.

From Equation (2), it is found that the transfer function G(s) is represented by Equation (3) indicated below.

$$G(s) = kp(1 + \frac{1}{\tau is} + \tau ds) \qquad \text{Equation (3)}$$

As is apparent from Equation (3), the time constant of the transfer function G(s) is determined by the integral gain and the derivative gain. When the charging and discharging circuit 44 is switched from the first power supply mode to the second power supply mode, the increase rate (response speed) of the motor drive voltage VMD decreases as the time constant increases. The integral gain and the derivative gain are set to such values that the assist torque TA does not change rapidly, when the charging and discharging circuit 44 is switched from the first power supply mode to the second power supply mode and the output voltage V2 of the capacitor 45 is changed from zero to the maximum voltage value of the capacitor 45. The integral gain and the derivative gain are set in advance through testing or simulation.

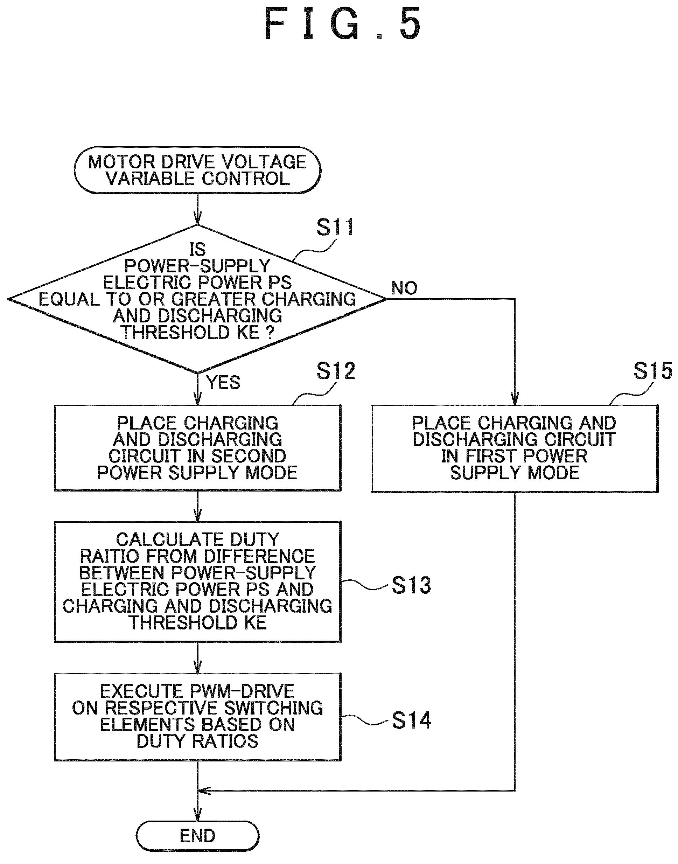

With reference to FIG. 5, the procedure of the motor drive voltage variable control executed by the control device 30 will be described. This process is executed repeatedly at predetermined intervals. Note that in the following description with reference to FIG. 5, components related to the EPS 1, to which the reference symbols are assigned, indicate the components illustrated in FIG. 2.

The control device 30 determines whether the power-supply electric power PS is equal to or greater than the charging and discharging threshold KE, in step S11. The control device 30 calculates the power-supply electric power PS based on the target assist torque. More specifically, the power-supply electric power PS increases as the target assist torque increases.

If an affirmative determination is made in step S11, the control device 30 places the charging and discharging circuit 44 in the second power supply mode, in step S12. Then, the control device 30 executes control for changing the motor drive voltage VMD, in step S13 and step S14. On the other hand, if a negative determination is made in step S11, the control device 30 places the charging and discharging circuit 44 in the first power supply mode, in step S15. At this time, the motor drive voltage VMD is the output voltage V1, which serves as the battery voltage of the main power supply 4.

The control device 30 calculates the duty ratios based on the difference between the power-supply electric power PS and the charging and discharging threshold KE, in step S13. Then, the control device 30 executes PWM driving on the switching elements 44A, 44B according to the duty ratios, in step S14.

The EPS 1 according to the present embodiment produces the following advantageous effects. In the motor drive voltage variable control, the EPS 1 suppresses a rapid increase in the motor drive voltage VMD by gradually increasing the duty ratio of the switching element 44A. This accordingly suppresses a rapid change in the assist torque TA, thereby suppressing the possibility that uncomfortable steering feeling will be given to the driver when the driver operates the steering wheel 2.

In the motor drive voltage variable control, the EPS 1 sets the duty ratio of the switching element 44A based on the difference between the power-supply electric power PS and the charging and discharging threshold KE, when the charging and discharging circuit 44 is in the second power supply mode. This suppresses excessive consumption of the electric power in the capacitor 45. This accordingly suppresses capacity shortage of the capacitor 45.

The electric power steering system according to the invention may be implemented in embodiments other than the aforementioned embodiment. Modified examples of the above-described embodiment will be described as the other embodiments of the electric power steering system according to the invention. Note that the following modified examples may be combined with each other.

The charging and discharging threshold KE in the aforementioned embodiment is a fixed value set in advance. However, the charging and discharging threshold KE is not limited to the one as described in the aforementioned embodiment. A charging and discharging threshold KE in a modified example is changed depending on the loaded condition of the main power supply 4 caused by an apparatus other than the EPS 1 (hereinafter, referred to as "power-supply loaded condition").

The power-supply loaded condition is classified into a high loaded condition, an intermediate loaded condition, and a low loaded condition. The high loaded condition is, for example, a condition in which an in-vehicle air conditioner operates at a relatively high air flow and a car navigation device operates. The intermediate loaded condition is, for example, a condition in which the in-vehicle air conditioner operates at a relatively intermediate air flow and the car navigation device operates. The low loaded condition is, for example, a condition in which the operation of the in-vehicle air conditioner and the operation of the car navigation device are both stopped.

The control device 30 executes charging-and-discharging-threshold change control for changing the charging and discharging threshold KE on the basis of the power-supply loaded condition. More specifically, the control device 30 changes the charging and discharging threshold KE to a first charging and discharging threshold that is greater than a reference charging and discharging threshold, which is a reference value of the charging and discharging threshold KE, or to a second charging and discharging threshold that is less than the reference charging and discharging threshold.

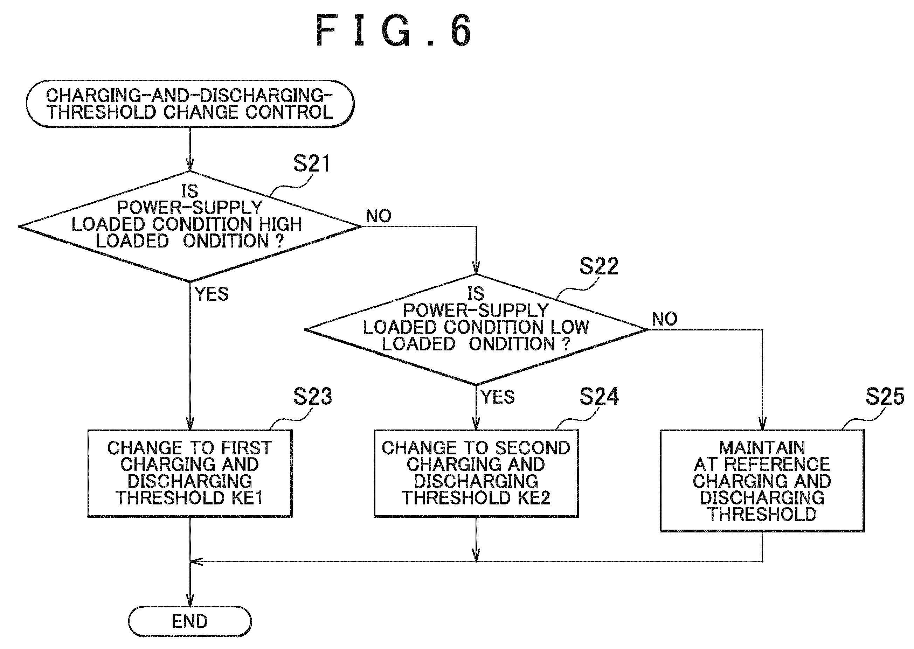

With reference to FIG. 6, the procedure of the charging-and-discharging-threshold change control will be described. This process is executed repeatedly at predetermined intervals.
The control device 30 determines the power-supply loaded condition in steps S21, S22. That is, the control device 30 determines, in step S21, whether the power-supply loaded condition is the high loaded condition. The control device 30 determines, in step S22, whether the power-supply loaded condition is the low loaded condition.

If an affirmative determination is made in step S21, that is, if it is determined that the power-supply loaded condition is the high loaded condition, the control device 30 changes the charging and discharging threshold KE to the first charging and discharging threshold KE1, in step S23. If a negative determination is made in step S21 and an affirmative determination is made in step S22, that is, if it is determined that the power-supply loaded condition is the low loaded condition, the control device 30 changes the charging and discharging threshold KE to the second charging and discharging threshold KE2, in step S24. If a negative determination is made in each of step S21 and step S22, that is, if it is determined that the power-supply loaded condition is the intermediate loaded condition, the control device 30 maintains the charging and discharging threshold KE at the reference charging and discharging threshold, in step S25.

With this configuration, the charging and discharging threshold KE decreases as the power-supply loaded condition becomes higher. Accordingly, as the power-supply loaded condition becomes higher, power supply to the motor driving circuit 34 in the state where the charging and discharging circuit 44 is in the second power supply mode is performed more frequently. Because the peak of the main power supply 4 is restricted (peak-cut) more frequently, it is possible to reduce a load on the main power supply 4. When the power-supply loaded condition is the low loaded condition, the charging and discharging threshold KE is increased, so that discharge from the capacitor 45 is performed less frequently. This suppresses a decrease in a useful life of the auxiliary power supply 40, which is caused due to repetition of charging and discharging of the capacitor 45.

In the modified example described above, the control device 30 calculates the duty ratios based on the difference between the power-supply electric power PS and the charging and discharging threshold KE at each time, when the charging and discharging threshold KE is changed in the motor drive voltage variable control.

In the control device 30, the motor drive voltage variable control may be executed on the condition that the charging and discharging circuit 44 is switched from the first power supply mode to the second power supply mode. More specifically, in the motor drive voltage variable control, the control device 30 executes a step of determining whether the charging and discharging circuit 44 is in the first power supply mode, the step being interposed between step S11 and step S12 in FIG. 5. If an affirmative determination is made in this step, that is, if the charging and discharging circuit 44 is in the first power supply mode, the process proceeds to step S12. On the other hand, if a negative determination is made in this step, that is, if the charging and discharging circuit 44 is in the second power supply mode, the process ends.

In the motor drive voltage variable control, the control device 30 controls a change in the motor drive voltage VMD based on the difference between the power-supply electric power PS and the charging and discharging threshold KE. However, the control on the change in the motor drive voltage is not limited to the one as described in the aforementioned embodiment. For example, the control device 30 in a modified example changes the motor drive voltage VMD by discharging the electric power charged in the capacitor 45, when the charging and discharging circuit 44 is switched from the first power supply mode to the second power supply mode. The control device 30 in the modified example sets the transfer function as $1/(sT + 1)$. Note that T indicates a time constant.

With this configuration, the increase of the duty ratio of the switching element 44A and the decrease of the duty ratio of the switching element 44B are set according to the time constant of the transfer function of the control device 30 in the modified example. That is, a delay is introduced into each of the duty ratios of the switching elements 44A, 44B. This suppresses a rapid increase of the motor drive voltage VMD, thereby suppressing a rapid change in the assist torque TA.

The EPS 1 in the aforementioned embodiment may include a plurality of auxiliary power supplies 40.
The auxiliary power supply 40 in the aforementioned embodiment includes the capacitor 45. However, the configuration of the auxiliary power supply 40 is not limited to the one as described in the aforementioned embodiment. For example, the auxiliary power supply 40 in a modified example includes a secondary battery such as a lithium ion battery instead of the capacitor 45.

As the capacitor 45 in the aforementioned embodiment, an electric double layer capacitor is used. The kind of the capacitor 45 is not limited to the one as described in the aforementioned embodiment. For example, as a capacitor 45 in a modified example, a lithium ion capacitor is employed instead of the electric double layer capacitor.

As the switching elements 44A, 44B in the charging and discharging circuit 44 in the aforementioned embodiment, MOSFETs are used. The kind of the switching elements 44A, 44B is not limited to the one as described in the aforementioned embodiment. As the switching elements 44A, 44B in the charging and discharging circuit 44 in a modified example, IGBTs are used, for example. In short, the switching elements 44A, 44B may be switching elements other than the MOSFETs, as long as their duty ratios can be changed.

The electric motor 21 in the aforementioned embodiment has a three-phase brushless motor. However, the configuration of the electric motor 21 is not limited to the one as described in the aforementioned embodiment. For example, the electric motor 21 in a modified example is a motor with brush.

The EPS 1 in the aforementioned embodiment has a column-assist type configuration. However, the configuration of the EPS 1 is not limited to the one as described in the aforementioned embodiment. For example, the EPS 1 in a modified example has a configuration of a pinion assist type, a dual pinion assist type, a rack coaxial type, or a rack parallel type.

The technical idea that can be understood from the above-described embodiments, as well as its advantageous effects will be described below. The electric power steering system is configured such that the control device controls a charging and discharging threshold in a variable manner based on the state of electric power supply from the main power supply to an electrical apparatus other than the electric power steering system.

In the electric power steering system, when a load placed on the main power supply by the electrical apparatus other than the electric power steering system is large, the charging and discharging threshold is decreased so that the auxiliary power supply discharges electric power, thereby reducing the load on the main power supply. On the other hand, when a load placed on the main power supply by the electrical apparatus other than the electric power steering system is small, the charging and discharging threshold is increased, so that the auxiliary power supply discharges electric power less frequently. This suppresses a decrease in the useful life of the auxiliary power supply, which is caused due to repetition of charging and discharging of the auxiliary power supply. Note that the electric apparatuses other than the electric power steering system include, for example, an air conditioner and a car navigation device.

## Claims

1. An electric power steering system, comprising:

   an electric motor that generates assist torque based on steering torque;
   a main power supply that supplies electric power to the electric motor;
   an auxiliary power supply connected in series with the main power supply and capable of discharging electric power to the electric motor; and
   a control device that controls a voltage to be applied to the electric motor, wherein:

   when the auxiliary power supply starts discharging electric power to the electric motor, the control device introduces a delay into a command signal for commanding the auxiliary power supply to discharge electric power.

2. The electric power steering system according to claim 1, wherein:

   the control device controls the voltage to be applied to the electric motor in a variable manner based on a difference between power-supply electric power consumed by the electric power steering system due to assist control for assisting steering, and a charging and discharging threshold, which is a reference value for making a switchover between charging from the main power supply to the auxiliary power supply and discharging from the auxiliary power supply to the electric motor.

3. The electric power steering system according to claim 1 or 2, further comprising, a switching element that periodically makes a switchover between an on-state in which the auxiliary power supply is able to discharge electric power to the electric motor and an off-state in which the auxiliary power supply is not able to discharge electric power to the electric motor, wherein:

   a duty ratio of the switching element is set as a ratio of a duration in which the switching element is in the on-state, to one period of the switching element;
   the command signal is the duty ratio of the switching element; and
   the control device gradually increases the duty ratio of the switching element as the delay introduced into the command signal.

# FIG.1

EP 2 727 796 A2

# FIG.2

EP 2 727 796 A2

# FIG.3

A

LARGE

KE

POWER-
SUPPLY
ELECTRIC
POWER

SMALL

0

| TD1 | TC1 | TD2 | TC2 | TD3 | TC3 |

B

LARGE

STORAGE
AMOUNT
OF
CAPACITOR

SMALL

0    t11    t12    t13         t14              t15  t16 t17

TIME

# FIG.4

A

DUTY RATIO (%)
OF SWITCHING
ELEMENT 44A

100

0

B

DUTY RATIO (%)
OF SWITCHING
ELEMENT 44B

100

0

LARGE

C

MOTOR DRIVE
VOLTAGE VMD

SMALL

V1+V2

V1

LARGE

D

ASSIST
TORQUE TA

SMALL

t21                    t22

TIME

# FIG.5

```
┌─────────────────────────┐
( MOTOR DRIVE VOLTAGE     )
( VARIABLE CONTROL        )
└─────────────────────────┘
```

S11

```
        IS
   POWER-SUPPLY
  ELECTRIC POWER PS
EQUAL TO OR GREATER CHARGING         NO
  AND DISCHARGING
   THRESHOLD KE ?
```

YES         S12                                    S15

```
┌─────────────────────┐        ┌─────────────────────┐
│   PLACE CHARGING    │        │  PLACE CHARGING AND │
│   AND DISCHARGING   │        │ DISCHARGING CIRCUIT │
│   CIRCUIT IN SECOND │        │    IN FIRST POWER   │
│  POWER SUPPLY MODE  │        │    SUPPLY MODE      │
└─────────────────────┘        └─────────────────────┘
```

```
┌──────────────────────────┐
│    CALCULATE DUTY        │
│ RAITIO FROM DIFFERENCE   │
│  BETWEEN POWER-SUPPLY    │    S13
│  ELECTRIC POWER PS AND   │
│ CHARGING AND DISCHARGING │
│     THRESHOLD KE         │
└──────────────────────────┘
```

```
┌──────────────────────────┐
│   EXECUTE PWM-DRIVE      │
│ ON RESPECTIVE SWITCHING  │    S14
│   ELEMENTS BASED ON      │
│     DUTY RATIOS          │
└──────────────────────────┘
```

```
┌─────────────┐
(    END      )
└─────────────┘
```

15

# F I G . 6

CHARGING-AND-DISCHARGING-
THRESHOLD CHANGE CONTROL

S21

IS POWER-SUPPLY LOADED CONDITION HIGH LOADED ONDITION ? — NO

YES

S22

IS POWER-SUPPLY LOADED CONDITION LOW LOADED ONDITION ? — NO

YES

S23
CHANGE TO FIRST CHARGING AND DISCHARGING THRESHOLD KE1

S24
CHANGE TO SECOND CHARGING AND DISCHARGING THRESHOLD KE2

S25
MAINTAIN AT REFERENCE CHARGING AND DISCHARGING THRESHOLD

END

**EP 2 727 796 A2**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008265381 A